# EUROPEAN PATENT SPECIFICATION

(11) **EP 2 330 919 B1**
(45) Date of publication and mention of the grant of the patent: **12.12.2012**
(21) Application number: 09736615.7
(22) Date of filing: 22.09.2009
(51) Int. Cl.: A23G 3/00, A23G 3/02, A23G 3/20, A23G 4/20, A23G 4/04

(54) **CONFECTIONERY AND METHODS OF PRODUCTION THEREOF**
KONFEKT UND VERFAHREN ZU SEINER HERSTELLUNG
CONFISERIE ET SES PROCÉDÉS DE PRODUCTION

(30) Priority: 23.09.2008 GB 0817368
(43) Date of publication of application: 15.06.2011
(73) Proprietor: Cadbury UK Limited, Birmingham B30 2LU (GB)
(72) Inventor: VAMAN, Shama, Karu, London SW6 6BH (GB); PEARSON, Sarah, Jayne, Prestwood, Canberra, ACT 2913 (AU); NORTON, Clive, Richard, Thomas, Shinfield RG2 9EF (GB); KEARSLEY, Malcolm, Wilfred, Reading RG6 7PD (GB); MACKLEY, Malcolm, Robert, Cambridge CB4 1AP (GB); HALLMARK, Bart, Cambridgeshire CB24 3GZ (GB)
(74) Representative: Wilson Gunn
(86) International application number: PCT/GB2009/002240
(87) International publication number: WO 2010/034973

(56) References cited:
- EP-A- 1 151 673
- WO-A-2005/056272
- WO-A-2007/056685
- WO-A-2008/044122
- US-A1- 2002 136 812

## Description

### Technical Field of the Invention

The present invention relates to confectionery and method of production thereof. In particular, the invention relates to confectionery comprising a plurality of capillaries which may contain a fluid.

### Background to the Invention

It is desirable to produce confectionery formed of different components, so as to increase sensory pleasure. A number of confectionery products exist, which have a flavoured liquid or syrup centre which is released upon chewing. For example, WO2007056685 discloses an apparatus and method for the continuous production of centre-filled confectionery products in the format of a continuous extrudate having a plurality of centre-filled confectionery ropes. Whilst a product formed from such an apparatus does increase sensory pleasure, the period of pleasure is often short lived as the centre is released quickly and/or degraded. It is therefore an object of the present invention to provide a confectionery product which can release a fluid centre over an extended period of time.

There is also a demand for providing confectionery having a reduced fat or sugar content. It is thus a further object of the present invention to provide a confectionery product which can be produced having a lowered fat or sugar content, whilst still maintaining an excellent sensory pleasure.

It is an aim of an embodiment or embodiments of the present invention to overcome one or more of the problems of the prior art. It is also an aim of one of the embodiments of the present invention to provide a confectionery having an extended fluid fill release profile and a method of manufacture thereof. It is also a further aim of the present invention to provide a confectionery which has a reduced fat and/or sugar profile and a method of manufacture thereof.

### Summary of the Invention

According to an embodiment of the present invention, there is provided a confectionery product comprising an extruded body portion, the body portion being formed from a material which is liquid during extrusion and which has a plurality of capillaries disposed therein, the capillaries having a width or diameter of no more than 3mm, which results in a voidage of over 35%.

The present invention therefore provides for a confectionery product which can be used in confectionery having an extended release of a material inserted into the capillaries, or a confectionery product having a large voidage so as to reduce the amount confectionery material used in the product, whilst maintaining the overall size of the product.

It should be understood that the term "liquid" is intended to mean that the material is capable or has a readiness to flow, including gels, pastes and plasticized chocolate. Furthermore, this term is intended to include (but not limited to) those materials which may be "molten" during extrusion and the skilled addressee will understand that the term "molten" means that the material has been reduced to a liquid form or a form which exhibits the properties of a liquid.

The body portion may be at least partially or substantially solid, so that it can no longer be considered to flow in a liquid form.

The material used to produce the body portion may comprise a number of materials commonly use in the production of confectionery - such as candy, gum and chocolate etc.

In some embodiments, the body portion is chocolate. Suitable chocolate includes dark, milk, white and compound chocolate. In some embodiments, the body portion is chewing gum, bubble gum or gum base. In other embodiments, the body portion is candy. Suitable candy includes hard candy, chewy candy, gummy candy, jelly candy, toffee, fudge, nougat and the like.

The capillaries may extend along the substantially entire length of the body portion, but may in some embodiments extend no less than 75%, 80%, 90%, 95% or 99% along the length of the body portion (for example, when it is desired to seal the ends of the body portion). If the capillaries extend along the entire length of body portion, suitably the ends of the capillaries are visible at one or more ends of the body portion.

One or more of the capillaries may be filled with a material which is different from that of the material used to form the body portion. Different capillaries may incorporate different materials if desired. The capillaries may be filled with a fluid material. Such a fluid may comprise a liquid. The capillaries may be filled with a material which is solid at a room temperature and fluid at a temperature greater than room temperature. For example, a molten chocolate may be incorporated into the capillaries and allowed to set when cooled to room temperature. It will be apparent to the skilled addressee that room temperature is commonly regarded as around 20°C. Alternatively, the capillaries may be filled with a material which is deposited as a liquid and which subsequently solidifies. In such embodiments, the solidification may be dependent or independent of heat. It will be apparent that solidification of a liquid filled capillary may be achieved in a number of ways. For example solidification may take place due to one or more of the following:
Cooling - the filling may be molten when deposited which then cools to a solid at room temperature;
Heating - the filling may be liquid when deposited, and the heat of the extruded body portion sets the filling (e.g. pumping egg albumen into a hot hard candy extruded body portion will set the egg on contact);
Drying - the filling may be a solution that dries into a solid (e.g. the moisture from the solution is absorbed into the extruded body portion);
Solvent loss - the filling may be in a solvent, whereby the solvent is absorbed into the extruded body portion, leaving a solid;
Chemical reaction - the filling may be deposited as a liquid but reacts or "goes off' into a solid;
Cross-linking - the filling may form a constituents for a cross-linked material due to mixing and/or heating; and
Time - the filling may simply set with time (e.g. a solution of sugars and gelatin will eventually set over time).

Suitable filling materials for the capillaries include, but are not limited to, aqueous media, fats, chocolate, caramel, cocoa butter, fondant, syrups, peanut butter, jam, jelly, gels, truffle, praline, chewy candy, hard candy or any combination or mixture thereof.

If desired, the product may further comprise a coating portion to envelop the body portion. The skilled addressee will appreciate that a number of coatings could be employed - for example chocolate, gum, candy and sugar etc.

The body portion may be connected to one or more further confectionery portions. In some embodiments, the body portion is sandwiched between confectionery materials or may be connected or laminated to one or more confectionery layers. The further confectionery portion or portions may or may not contain inclusions, liquid-filled beads etc.

In some embodiments, the capillaries are distributed substantially uniformly throughout the body portion, and may be spaced evenly apart from adjacent capillaries. In other embodiments, the capillaries may be distributed in predefined configurations within the body portion, such as around the periphery of the body portion, or in groups at one or more locations within the body. In some embodiments the body portion has a circular, elliptical, regular polygonal or semicircular cross-section. The body portion may be shaped in the form of a cylinder, a rope, a filament, a strip, a ribbon or the like, or may be shaped in the form of a standard confectionery product such a chocolate bar, or chewing gum slab, pellet, ball, stick or ribbon, for example. The body portion may be irregular or regular in shape. Furthermore, the body portion may be formed in potentially any shape, for example in the shape of an object, cartoon character or an animal to name a few.

Two or more capillaries may have different widths or diameters. Such an arrangement will allow, if desired, for different quantities of different fill materials to be incorporated into different capillaries. Furthermore, the two or more capillaries may have different cross-sectional profiles. For example, the confectionery product may have capillaries having a cross-sectional shapes including stars and triangles, or different shapes of animals etc.

In an embodiment, the capillaries in the body portion result in a voidage in the range of over 35-99% of the extrudate. The voidage may be in the range of over 35 - 60%, over 35 - 50%, over 35 - 45%, or over 35 - 40%. The voidage may be over 35% and up to 99%, 95%, 90%, 80%, 60%, 50%, 45%, 35%, 30%, 20%, 10%, or 5%. The voidage may be over 5%, 10%, 15%, 20%, 25%, 30%, 35%, 40%, 45%, 50%, 55%, 60%, 65%, 70%, 75%, 80%, 85%, 90% or 95%.

The incorporation of capillaries of a small cross-sectional width or diameter enables the capillaries to entrain contrasting or complementary confectionery materials into the body portion whilst avoiding the need to incorporate large centre-fill areas which may be prone to leakage through, or out of, the confectionery product. The use of a plurality of capillaries also enables two or more materials to be incorporated into the confectionery product to give multiple textures, tastes, colours and/or mouth-feel sensations, throughout the whole confectionery product.

In some embodiments, the capillaries have a diameter or width of no more than, 2mm, 1mm, 0.5mm, 0.25mm or less. It is possible to have capillaries having a diameter or width of no more than 100µm, 50µm or 10µm.

The confectionery product may comprise a first extruded portion and a second extruded portion, wherein each portion has a plurality of capillaries disposed therein, and the capillaries of the first and second portions are:
a) discontinuous; and/or
b) continuous and oriented in more than one direction.

The capillaries of each portion may be formed substantially parallel to one another. In one embodiment, the first and second portions are in a stacked configuration, such that the capillaries of the first and second portions are substantially parallel to each other. In an alternative embodiment, the first and second portions are in a folded configuration. In yet another alternative embodiment, the first and second portions are discontinuous and the capillaries are oriented in a random configuration in relation to one another. In some embodiments, the capillaries of the first and/or second portions have a diameter or width of no more than, 3mm, 2mm, 1mm, 0.5mm, 0.25mm or less. It is possible to have capillaries having a diameter or width as low as 100µm, 50µm or 10µm. The capillaries of the first and/or second portions may have different widths or diameters.

There may be further portions in addition to the first and second portions, which may or may not comprise capillaries. In one embodiment, the confectionery product comprises the first portion separated from the second portion by one or more further portions that may or may not contain capillaries.

The first and second portions may be as described hereinabove for the body portion. The first and second portions may comprise the same material or different materials. For example, the first portion may be chocolate and the second portion candy. The capillaries in each of the first and second portions may be filled with the same or different materials. One or more capillaries in the first and/or second portions may be filled with different material(s) to other capillaries in the first and/or second portion.

According to a further embodiment of the invention, there is provided a confectionery product comprising an extruded body portion having a plurality of capillaries disposed therein, wherein each capillary is separated from each adjacent capillary by a wall formed from the extruded body portion and wherein the wall between each capillary has a thickness of no more than the width or diameter of the capillaries.

According to a yet another embodiment of the present invention, there is provided a confectionery product comprising an extruded body portion, the body portion having a plurality of capillaries disposed therein, the capillaries having a width or diameter of less than 0.2mm.

According to a yet another embodiment of the present invention, there is provided a confectionery product comprising an extruded body portion, the body portion having a plurality of capillaries disposed therein, the capillaries in the body portion resulting in a voidage in the range of over 35 - 99% of the extrudate.

The skilled addressee will of course realise that these subsequent embodiments may incorporate features which have already been discussed with reference to the initial embodiment.

According to a further embodiment, there is provided a process for manufacturing a confectionery product comprising a body portion, having a plurality of capillaries disposed therein, the process comprising the step of:
a) extruding an extrudable confectionery material which is liquid during extrusion with a plurality of capillaries disposed therein, wherein the capillaries have a width or diameter of no more than 3mm and a voidage of over 35%.
In some embodiments, the method may include an extra step selected from:
b) cutting the extrudate into two or more pieces having a plurality of capillaries disposed therein and forming a confectionery product incorporating the pieces; and/or
c) folding the extrudate and forming a confectionery product incorporating the folded extrudate.

Any of the above processes may further comprise the step of depositing a filling in at least part of one or more of the capillaries. The deposition of the filling may be during the step of extrusion - but could also take place after extrusion. In an embodiment, the filling comprises a fluid. The fluid may comprises a liquid, or a material which is liquid at a temperature greater than room temperature. The fluid may solidify after deposition if desired.

Any of the processes may further comprise the step of quench cooling the extrudate after extrusion. The quench cooling may utilise a fluid, such as air, an oil or liquid nitrogen - but other methods of quench cooling will also be apparent to the skilled addressee.

Any of the processes may further comprise the step of, after extrusion, stretching the extrudate. Stretching the extrudate may be undertaken by a number of means, for example passing the extrudate over, or through conveyor belts or rollers operating at different speeds, so as to stretch the extrudate. By employing this additional step, extrusions having capillaries of a larger diameter can be undertaken, which can be reduced in diameter gradually over time so as to produce an extrudate with smaller capillaries which would have been more difficult to produce. Commonly, capillaries having a bore size of 2mm or more will be produced during extrusion and these capillaries will be reduced significantly by stretching the extrudate. In some embodiments the capillaries are reduced to no more than 1mm, 0.5mm, 0.25mm, 100µm, 50µm, 25µm or 10µm.

Any of the processes may further comprise the step of enveloping the confectionery product in a coating. Such a coating will be apparent to the skilled addressee and discussed previously.

The extrudable confectionery material will at least partially or substantially solidify after extrusion.

If desired, two or more capillaries may be formed having different widths or diameters. Furthermore, two or more of the capillaries may be formed having different cross-sectional profiles.

The processes may be used for producing a confectionery material as herein above described.

A further embodiment of the present invention provides for apparatus which is adapted for producing a confectionery product according to the processes as herein above described. WO2005056272 discloses an apparatus for producing an extrudated product including a plurality of capillary channels. WO2008044122 discloses a related apparatus, which additionally includes means for quench cooling an extrudate as it exits the die. Both of these apparatus may be employed/adapted for use in producing the confectionery in accordance with the present invention.

### Detailed Description of the Invention

Specific embodiments of the present invention will now be described, by way of example only, with reference to the accompanying drawings, in which:
Figure 1 is a schematic diagram illustrating the overall apparatus used for the experiments described in Examples 1 and 2, in accordance with the present invention;
Figure 2 is a schematic diagram illustrating the apparatus which can be used in conjunction with the apparatus shown in Figure 1, so as to provide a liquid filled capillaries;
Figure 3 is a photograph of the extrusion die used to form capillaries in the extruded material of Examples 1 and 2;
Figure 4 is a plan view of the extrusion die which incorporates the extrusion die shown in Figure 3 in the apparatus as illustrated in Figures 1 and 2;
Figure 5 shows photographs of four capillary extrudates formed from material 1 in Example 1, the photographs show: (A) low voidage, (B) and (C) high voidage and (D) very high voidage;
Figure 6 shows photographs comparing capillary extrudates formed from (A) material 2 containing completely filled cocoa butter capillaries and (B) material 1 formed with air filled capillaries;
Figure 7 shows a photograph of the external part of the extrusion apparatus as illustrated in Figures 1 and 2, showing the air knives used to cool the extrudate when it exist the die;
Figure 8 shows a hard candy with an air fill produced in Example 2, in accordance with the present invention;
Figure 9 shows a hard candy with a liquid fill produced in Example 2, in accordance with the present invention;
Figure 10 shows a gum with an air fill, produced in Example 2, in accordance with the present invention;
Figure 11 shows a gum with a liquid fill, produced in Example 2, in accordance with the present invention;
Figure 12 shows a gum with a solid fill, produced in Example 2, in accordance with the present invention;
Figure 13 shows a chocolate with an air fill, produced in Example 2, in accordance with the present invention;
Figure 14 shows a chocolate with an air fill as shown in Figure 13, but in longitudinal cross section;
Figure 15A shows a perspective view of an extrudate formed in accordance with the present invention, where the extrudate has been folded;
Figure 15B shows a cross-sectional view of the extrudate as shown in Figure 15A, viewed from the line denoted "X";
Figure 16 shows a perspective view of an extrudate formed in accordance with the present invention, where a number of extrudated layers have been stacked upon one another;
Figure 17 shows a schematic cross-section of a confectionery product in accordance with the present invention, where the capillaries are of a uniform cross-sectional shape and arranged in a uniform manner;
Figure 18 shows a schematic cross-section of a confectionery product in accordance with the present invention, where the capillaries are formed having different cross-sectional shapes;
Figure 19 shows a similar schematic cross-section of a confectionery product similar to that shown in Figure 18, however the confectionery product is formed of three different portions.
Figure 20 shows a schematic cross-section of a confectionery product in accordance with the present invention, where the capillaries are arranged in a uniform manner in particular areas of the confectionery product; and
Figure 21 shows a schematic cross-section of a confectionery product in accordance with the present invention, where each capillary is separated from each adjacent capillary by a wall formed from the extruded body portion and the wall between each capillary has a thickness of no more than the width or diameter of the capillaries.

Experiments were conducted to produce a variety of confectionery products incorporating capillaries. Three phases of extrusion work were undertaken using various materials. The first phase concerned the extrusion of hard candy using a capillary die attached to a small-scale extruder in a non-food grade environment for creating capillary candy extrudates in both low- and high-voidage forms. The second phase of the experimental work built upon the first phase to produce low and high voidage candy capillary extrudates containing an array of cocoa-butter filled capillaries. The first and second phases are described below in Example 1. The third phase built upon the first two and recreated the working environment with food grade equipment in a food grade environment and is described below in Example 2.

### Example 1

Phase one concerned the extrusion of candy using a capillary die attached to a small-scale extruder, in order to confirm that candy having capillaries with both low and high voidage values could be formed in accordance with the present invention.

The materials that were trialled during this investigation are shown in Table 1.

**Table 1. Materials tested.**

| **Material number** | **Material name** | **Majority ingredients** | **Application** |
|---|---|---|---|
| 1 | Custom recipe 1 | Sugar (40%) Glucose Syrup (60%) | Extruded matrix |
| 2 | Custom recipe 2 | Maltitol syrup (96%) Gum Arabic (2%) Water (2%) | Extruded matrix |
| 3 | Cocoa butter | Cocoa butter (100%) | Capillary filler |

Materials 1 and 2 were supplied as large solid blocks. All materials were crushed prior to extrusion to yield a fine granular powder, with grain sizes ranging between 1 mm and 5 mm. Material 3 was supplied as a tub of solidified cocoa butter; the required quantity was broken up into a fine powder containing only small lumps before being fed into the heated cocoa butter reservoir.

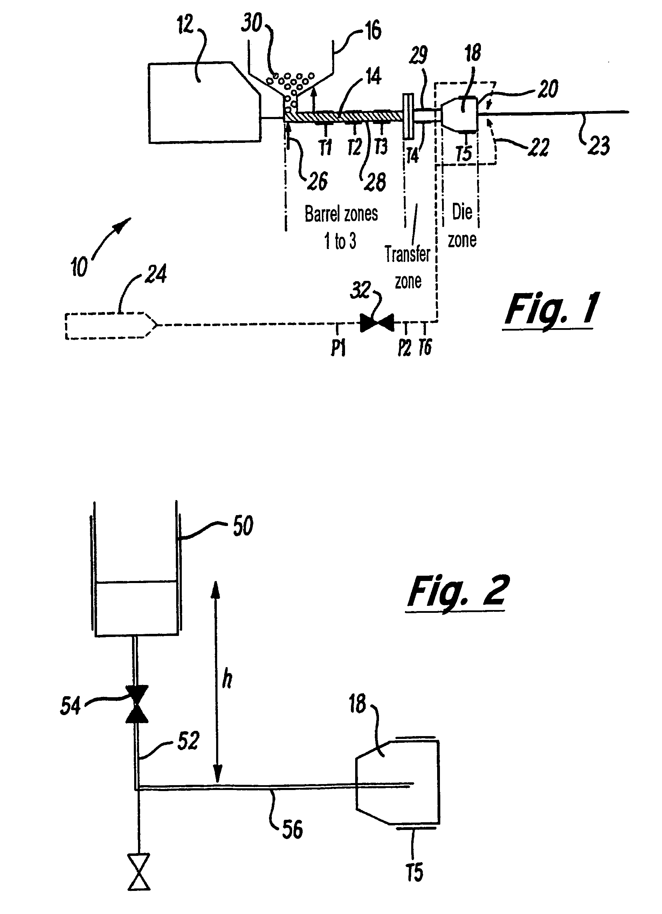

The extrusion equipment consisted of a Betol-single screw extruder, with a screw diameter of approximately 12 mm, and a screw L/D ratio of roughly 22.5:1. The extruder had four different temperature zones (denoted T1-T4 in figure 1 as described later), each of which could be independently controlled using PID controllers connected to band heaters. The Mk 3 MCF extrusion die, containing an entrainment array consisting of 17 hypodermic needles, was connected on the extruder endplate. Two opposed air jets, used to rapidly quench the extrudate emerging from the extrusion die, were placed above and below the die exit; these jets were connected via a valve to a compressed air line at 6 Barg. A schematic diagram showing the general layout of the extrusion line is shown in Figure 1 and a schematic drawing of the capillary die is shown in Figure 2.

With reference to Figure 1, there is shown a schematic diagram of the extrusion apparatus 10 used in the experiments. The apparatus briefly comprises an electric motor 12 which is rotatably coupled to an extrusion screw 14. The screw 14 is fed at one end by a hopper 16 and the opposing end is coupled to an extrusion die 18 having an extrudate outlet 20. Quench jets 22 are directed towards the die outlet 20 so as to cool the extruded material 23 which is produced and these jets are fed with compressed air 24. If desired, the area of the apparatus where the hopper 16 is coupled to the screw 14 can be cooled by means of a cooling feed 26. Surrounding the screw 14 is a barrel 28 which is formed having three barrel temperature zones denoted T1 to T3 - the temperatures of each zone being capable of being controlled. The barrel 28 is connected to the die 18 by means of a feed conduit 29 which also has a temperature zone T4 which can be controlled.

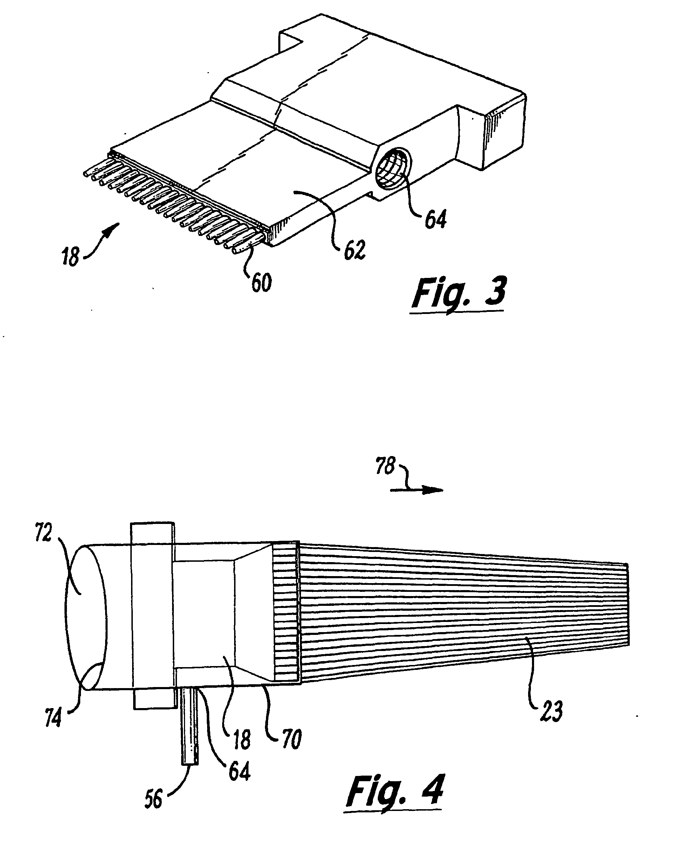

In use, the hopper 16 is filled with material 30 (such as candy in solution) which can be heated so as to render it (or maintain it as) a liquid (not solid or solid particulate form). Before the material passes into the screw 14, it can be cooled by means of the cool feed 26, so as to ensure that the material is at the correct temperature for entering the screw extruder. As the screw is rotated, the liquid material is drawn along the screw 14, inside the barrel 28 and the temperature of the zones T1-T3 adjusted accordingly. The material then passes through the feed conduit 29 and the temperature adjusted again (if required) by temperature control T4 before entering the die 18. The die 18 (shown in Figure 3) has a number of needles (not shown) located within an entrainment body so that the material passes over and around the needles. At the same time that the material is being extruded, compressed air 24 is forced through the needles so that the extrudate contains a number of capillaries. The extrudate 23 is cooled by means of the quench jets 22 as it is released from the die 18. A valve 32 controls the flow of compressed air to the apparatus and pressure devices P1 and P2 control the pressure of the compressed air 24 before and after the valve. The compressed air line also has a temperature control T6 so as to control the temperature of the air before entering the die.

With reference to Figure 2, there is shown an adaptation of the apparatus shown in Figure 1. Rather than compressed air 24 being forced through needles, the needles are connected to a reservoir 50 containing cocoa butter. The reservoir 50 is heated so that the cocoa butter is maintained at the correct temperature so as to maintain it in a liquid state. The reservoir 50 is connected to a conduit 52 having an isolation valve 54 for controlling the flow of liquid. The conduit 52 is encased in a trace heating tube 56 which maintains the temperature of the conduit so that the liquid remains in a liquid state during its movement within the conduit. The conduit 52 is coupled to the inlet to the die 18 having number of needles, so that when the material is being extruded, the capillaries formed around and the needles can be simultaneously filled with cocoa butter. Of course, the capillaries could be filled with other types of liquid material if desired.

Figure 3 shows the die 18 in more detail. In particular, this figure shows that the metallic die 18 has, at one end, a plurality of needles 60 which are joined to a cavity 62 which is in fluid communication with an inlet channel 64 for pumping a fluid material into the capillaries of the extrusion.

With reference to Figure 4, there is shown the die 18 in place in an entrainment body 70. Molten material 72 enters an opening 74 of the entrainment body 70 and the material is forced over and around the needles 60 of the die 18. At the same time, either air or liquid cocoa butter enters the die inlet by means of a fluid feed conduit 56. When operational, the molten material is extruded through the entrainment body 70 over the needles 60 of the die 18. Either air or cocoa butter is then pumped through the needles at the same time so as to produce an extrudate 23 (in direction 78) which either has capillaries with no filling or capillaries filled with cocoa butter.

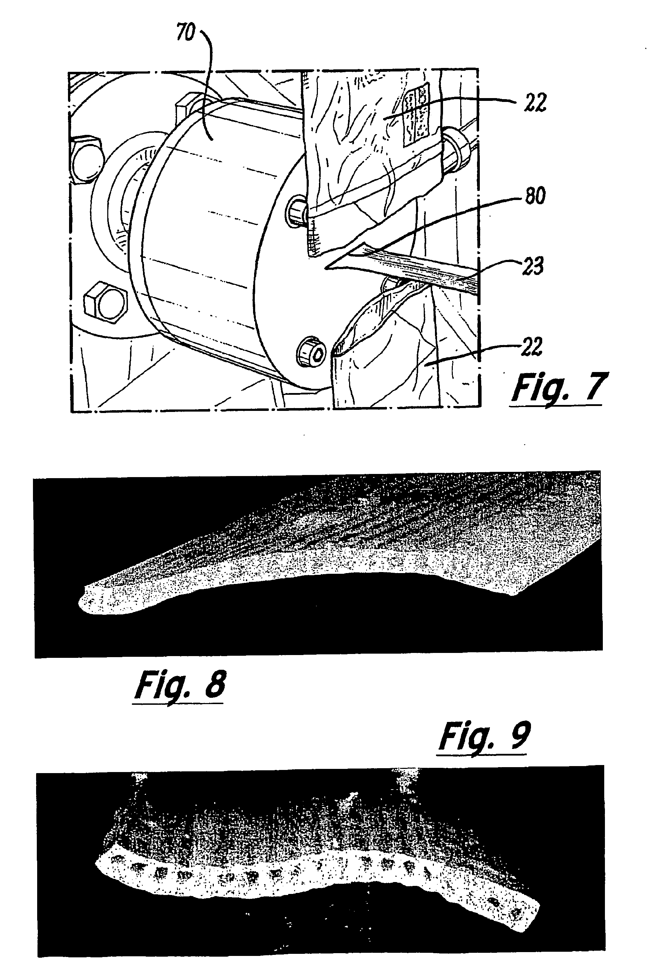

Figure 7 shows the entrainment body 70 having an opening 80, through which the extrudate is formed. This figure also shows two quench jets 22 located above and below the aperture so as to cool down the extrudate after is has been produced.

In use, the flow of molten material over the tips of the entrainment nozzles (hypodermic needles) caused a small area of low pressure to form at each needle tip. Each nozzle was connected together via internal channelling within the entrainment body. These, in turn, were connected outside the extrusion die to either air at room temperature and pressure or to a molten cocoa butter reservoir, with a hydraulic head of h in Figure 2. The pipework connecting the die to the cocoa butter reservoir and the cocoa butter reservoir was externally heated to maintain the cocoa butter in the liquid phase. A set of isolation valves were used to switch between either using an air feed to the entrainment body or a molten cocoa butter feed. This is shown schematically in Figure 2.

The quench jets were used for the generation of the high-voidage material. Differential scanning calorimetry (DSC) was used to examine the thermal behaviour of the materials, such that information relating to the phase transition temperatures could be obtained.

Material 1 was formed in a large solid block. The block was broken up mechanically, such that it became a granulated material with granule sizes between 1 mm and 5 mm.

The extrusion temperature profile was set to that shown in below Table 2.

**Table 2. Extruder temperature profile for material 1.**

| **Temperature zone** | **Label on** **Figure 1** |
|---|---|
| Barrel zone 1 | T1 |
| Barrel zone 2 | T2 |
| Barrel zone 3 | T3 |
| Die zone 1 | T4 |
| Die | T5 |

Granulated pieces of material 1 were starve-fed into the extruder, with the extruder screw-speed set to 40 rpm. The granules of material 2 conveyed well into the extruder in the solid phase initially, but due to the sticky nature of the material, some mild feed zone bridging and blocking was observed. This was overcome by gently pushing the broken-up material onto the extruder screw with a polyethylene rod.

Successful capillary extrudates were easily achievable using this protocol. The material had good melt strength and was pulled away easily from the die in the molten state before it set into a brittle, glassy, material. The glassy state of the material meant that it was unsuitable for use in a pair of nip rolls since the compression experienced by the material in this apparatus caused fracture. Consequently, the capillary extrudates from material 1 were hand drawn, the capillaries having an average diameter (width) of less than 4mm.

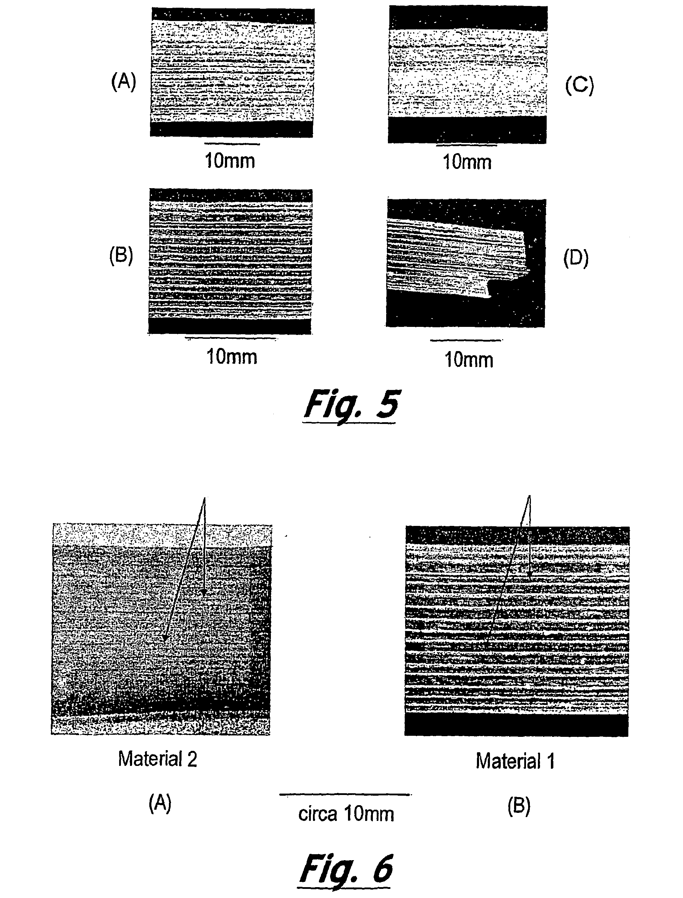

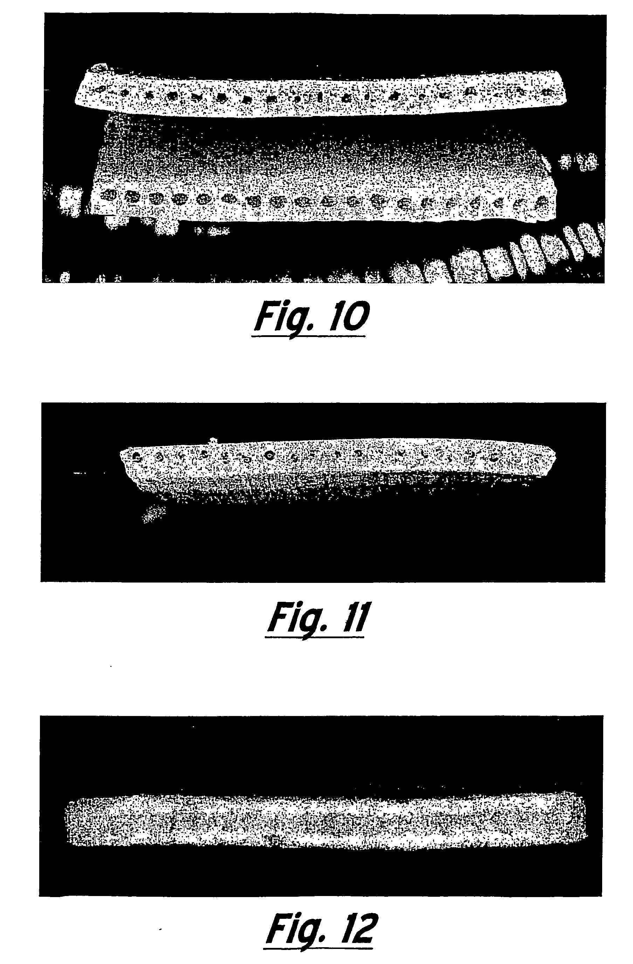

Low voidage MCF from material 1 was easily obtained without quenching the extrudate using the quench jets; this is illustrated in the photograph in Figure 5(A). Enhanced manual hauling of the extrudate away from the die exit coupled with use of the quench jets resulted in high voidage capillary being extruded. The ultimate voidage depended on the speed at which material is hauled away from the die; various different forms of high voidage capillary extrudate formed from material 1 are shown in Figure 5(B), (C) and (D). Crude optical analysis of the cross section of material similar to those shown in Figure 10 (B) and (C) revealed that voidage between 35% and 40% had been generated. It is highly likely that the high voidage material shown in Figure 10(D) was in excess of the value of 35% o 40%.

The second phase of the of extrusion experiments were conducted with material 1 using cocoa butter heated to between 35°C and 40°C. The head, h, of the cocoa butter reservoir was initially set to 8 cm, and material two fed into the extruder as described earlier. The initial proof of concept was successful, and resulted in the partial filling of the capillaries with molten cocoa butter. It was observed, however, that due to the increased viscosity of the cocoa butter compared to air, the rate at which cocoa butter could be entrained into the extrudate was slow. This problem appeared to be solved by increasing the head of the reservoir to 21.5 cm. It was also observed qualitatively that, in low voidage form, the cocoa-butter filled capillaries appeared somewhat smaller than their air-filled counterparts (less than 3mm compared to less than 4mm). It was also possible to create high-voidage cocoa-butter filled capillary extrudates, subject to the coca-butter head being-high enough to supply molten cocoa butter at the increased rate.

Material 1 was successfully formed into capillary extrudates, of both high and low voidage, with either airfilled capillaries or cocoa butter-filled capillaries. Varying different voidages films were made, and it was observed that increasing levels of voidage led to increasing fragility. A representative figure for one of the high voidage air-cored films was between 35% and 40% and it is estimated that the very high voidage, highly fragile films, exceeded this.

Material 2 was formed from a mixture of 96% maltitol syrup, 2% gum Arabic, 2% water. Material 2 was shown to act in a similar manner to material 1, in that it was supplied in a large block that was required to be broken up mechanically into smaller granules before it could be fed into the extrusion line. Prior to extrusion experiments commencing, the extrusion die was disassembled and washed and the extruder was fed a hot water wash to dissolve any material 1 remaining within the extruder barrels or on the screw. After the water was purged from the extruder, the extruder was heated to 130°C for between five and ten minutes to evaporate any remaining water. An early scoping experiment revealed that material 2 required higher extrusion temperatures than material 1; the final extrusion line temperature profile is shown in Table 3 below.

| **Temperature zone** | **Label on** **Figure 1** | **Temperature (°C)** |
|---|---|---|
| Barrel zone 1 | T1 | 115 |
| Barrel zone 2 | T2 | 115 |
| Barrel zone 3 | T3 | 115 |
| Die zone 1 | T4 | 115 |
| Die | T5 | 120 |

| | | |
|---|---|---|
| **Table 3. Extruder temperature profile for material 2.** | | |

As with material 1, material 2 was starve-fed into the extruder. As with material 1, the screw speed was set to 40 rpm. Material 2 proved to be easy to extrude and capillary extrudates with air-filled capillaries were produced in both low and high voidage forms. Material 2 exhibited good melt strength, good drawing characteristics prior to solidifying and became brittle and glassy upon solidification. Again, this precluded the use of nip rollers to draw the material from the die and control the amount of draw down achieved, hence manual drawing was used in a similar way to material 1. In terms of restarting the extrusion line after an idle period, material 2 did not prove to be noticeably different to material 1, and the line restarted relatively easily. Due to the ease with which capillary extrudates were achieved, phase one was concluded relatively quickly to allow progression to phase two.

Phase two experiments were conducted with material 2 using cocoa butter heated to between 35°C and 40°C. The head, h, of the cocoa butter reservoir was kept at 21.5cm, and material 2 starve-fed into the extruder as described in the previous section. Successful extrusion of both low- and high-voidage micro capillary extrudate from material 2 containing completely filled cocoa-butter capillaries was achieved. A photograph comparing the cocoa-butter filled capillaries of material 2 to the air filled capillaries of material 1 is shown in Figure 6. Crude optical analysis of a cross section of a piece of high-voidage material 2 revealed that the voidage was roughly 35% at minimum. It is likely this figure can be easily increased through optimisation of the protocol.

The observations for material 2 are similar to those from material 1. Low- and high-voidage capillary extrudates were formed, either containing cocoa-butter capillaries or air-filled capillaries. Crude optical analysis of a moderately high-voidage extrudate revealed that the void fraction was approximately 35%. Although, it is thought that the actual figure may have been higher. Increasing product voidage again led to increasing product fragility due to the capillary walls becoming very thin.

The objective of these first and second phase experiments were to provide proof-of-concept for the extrusion of capillary extridates from various candy materials. This was successful with both materials (material 1 = 40% sugar and 60% glucose, and material 2 = 96% maltitol syrup, 2% gum Arabic and 2% water). Low- and high-voidage capillary extrudates were formed containing both air-filled capillaries and cocoa-butter filled capillaries. It was estimated that a typical high-voidage extrudate contained roughly 35% to 40% voidage whether it was air filled or cocoa-butter filled.

### Example 2

The third phase built upon the first two phases described in Example 1 and recreated the working environment with food grade equipment in a food grade environment. This food-grade setup extruded hard candy, chocolate and chewing gum with air, liquid and solid centres. This range of filled extrudates were made in a food grade environment and were consumed to investigate their edible properties.

The following edible materials were used in these experiments:
Chewing gum (uncoated Peppermint-Spearmint Higher flavour chewing gum pellets); hard candy, mint candy (Extra Strong Mints®, Jakemans® Old Favourites), fruit candy (Summer Fruits, Jakemans® Old Favourites), chocolate (milk chocolate (with 0, ½, 1, 2% added water), Cadbury® Dairy Milk® Buttons - when used molten, 2% PGPR was added to lower the melt viscosity for ease of use (c.f. legal limit of ½%)), compound chocolate (Plain Belgian Chocolate, SuperCook®), 72% Cook's Chocolate, Green & Black's®. Liquid fillings used in these experiments included: monopropylene glycol (Propane-1,2-diol, BP, EP, USP, Fisher scientific® - selected for low viscosity, zero moisture, low flavour, and BP, EP & USP grade for oral use), Golden Syrup (partially inverted refiners syrup - Tate & Lyle® - selected for higher viscosity, food grade, shelf stability, and sweet flavour), Red Food Colouring (SuperCook®, UK), Blue Food Colouring (SuperCook®, UK). Lastly, a solid filling of cocoa butter obtained internally from a Cadbury Plc. site was also used in these experiments and this was selected because it is solid at room temperature and has low hot viscosity.

A Davis-Standard HPE-075 ¾" 24:1 single-screw extruder was used in these experiments. The extruder also included air-knives and a header tank. The screw was a simple conveying-compression-pumping all forward element design, with no mixing or reversing sections. The motor was 3KW, geared to produce 0-100rpm screw rotation. The feed throat was jacketed and supplied with flowing ambient water to prevent heat transfer from the barrel causing feed problems with sticky feedstuff. The barrel had three heating zones, each with a 1KW heater and forced ambient air cooler. The standard extruder has a Eurotherm 3216 controller per barrel zone and one spare for the die (die controller connected to thermocouple input and standard 16A 240v socket for up to 1KW heater output).

At point of purchase, two additional die controllers, thermocouple inputs and heater outputs were specified to enable integrated control of the header tank containing filling material and the pipework connecting that header tank to the die. The die was an assembly of parts comprising a body with main die orifice of long thin rectangular shape, through which 19 interconnected nozzles (similar in size to hypodermic needles) also exited. The main body was heated and the nozzles led to an external fitting that could be opened to ambient air or could be connected to the heated, pressurized header tank. A bobbin shaped flange was constructed to mount the die assembly onto the extruder end flange.

The die was heated with 4x 100W ¼" cartridge heaters, and monitored by a K-type thermocouple probe. Initially these were controlled by a Eurotherm 3216 in a bespoke enclosure until the control and power wiring was transferred to a Eurotherm integrated into the extruder. The die assembly was earthed into the power outlet from the extruder.

The header-tank and the pipework connecting the header tank to the die were heated with two 100W ribbon heaters initially controlled from a single analogue controller in a bespoke enclosure, and monitored by a single bare K-type thermocouple. These were later separated to two Eurotherm 3216s integrated into the extruder with two thermocouples and two power supplies. The header tank was earthed to the power outlet, whilst the pipework was plastic and did not need to be earthed.

Compressed air, BOC®, UK was regulated with series 8000 gas regulator and pressures used were 0-10bar. The main use for the compressed air was to supply the air-knives.

Food Safe High-Tech Grease, and Food Safe Penetrating Oil from Solent Lubricants, Leicester, UK was used.

The capillary die was connected on the extruder endplate. Two opposed air knives were used to rapidly quench the extrudate emerging from the extrusion die, were placed above and below the die exit; these jets were connected via a valve to a compressed air line at 10 bar pressure. A schematic diagram showing the general layout of the extrusion line is shown in Figure 1.

In use, the flow of molten material over the tips of the entrainment nozzles (hypodermic needles) caused a small area of low pressure to form at each needle tip. Each nozzle was connected together via internal channelling within the entrainment body. This, in turn, was connected outside the extrusion die to either air at room temperature and pressure or to a header tank containing a liquid that was at ambient or elevated temperature and pressure, with a hydraulic head of h. The header tank and the pipework connecting to the die were externally heated. A set of isolation valves were used to switch between either using an air feed to the entrainment body or a molten cocoa butter feed. This is shown schematically in Figure 2.

The quench jets were used for the generation of the high-voidage material. It had been found during previous research that if the emerging extrudate was quenched very rapidly and subjected to a high drawing force, a higher voidage cross section could be obtained. Adjustment of the polymer and process conditions yielded voidages up to, and possibly in excess of, 60%.

Hard candy was pre-broken before introduction to the extruder. Particle size was not important - the extruder was found to take whole candies or dust. It was found that broken candies fed more evenly than whole pieces. All barrels and the die were set to 95°C for fruit candy. Mint candy had tolerance to a wide range of temperatures and could run with barrels and die at 95° - 110°C.

Screw speeds of 15-100rpm were used in the experiments. Differences in product were minimal (except rate of production). Continuous, complete, transparent films with well formed capillaries could be produced optimisation of the protocol. The films could be filled and/or drawn without leaking. Product morphology was found to change with drawing speed and rate of cooling inline. Fast drawing with no cooling could thin the films to 1mm wide with microscopic width and capillaries. Drawing with heavy cooling enlarged the voidage in the films.

In another test, uncoated gum pellets were reduced in size to approximately 3mm to aid feeding into the extruder. This was done with freezing and a domestic food processor. Barrel and die temperatures of 58°C resulted in the most contiguous product. This product had sufficient integrity to be filled with few leaks. It is likely that using gum base, in particular molten gum base, rather than whole gum would produce films with even greater integrity.

In a further test, chocolate was used as material for extrusion. To gain stable running conditions, the heaters and cooling fans of the extruder were electrically disabled. Direct temperature control was abandoned in favour of relying on the air conditioning of the laboratory. With these modifications the extruder barrel indicated an even 22°C and it was simple to extrude capillary chocolate in a steady state using molten tempered Cadbury's Dairy Milk® chocolate.

As with hard candy extrusion, it was possible to draw the chocolate extrudate so as to alter the cross sectional geometry, and produce capillaries having diameters or widths of between 0.5mm and 4mm.

Air filling was achieved through a simple ambient air-bleed to the nozzles in the die and a cross section of the extrudate is shown in Figure 8.

Monopropylene glycol filling was achieved at ambient temperature and pressure, with approximately 5cm liquid depth in the header tank which was in turn approximately 10cm higher than the die. Colour was added directly into the header tank as and when required.

Golden Syrup filling was achieved by heating the header tank and pipework to 78°C to fill hard candy, and 58°C to fill gum. Pressurisation of the header tank was required at the lower temperature to generate syrup flow. Again, colour was added directly into the header tank as and when required.

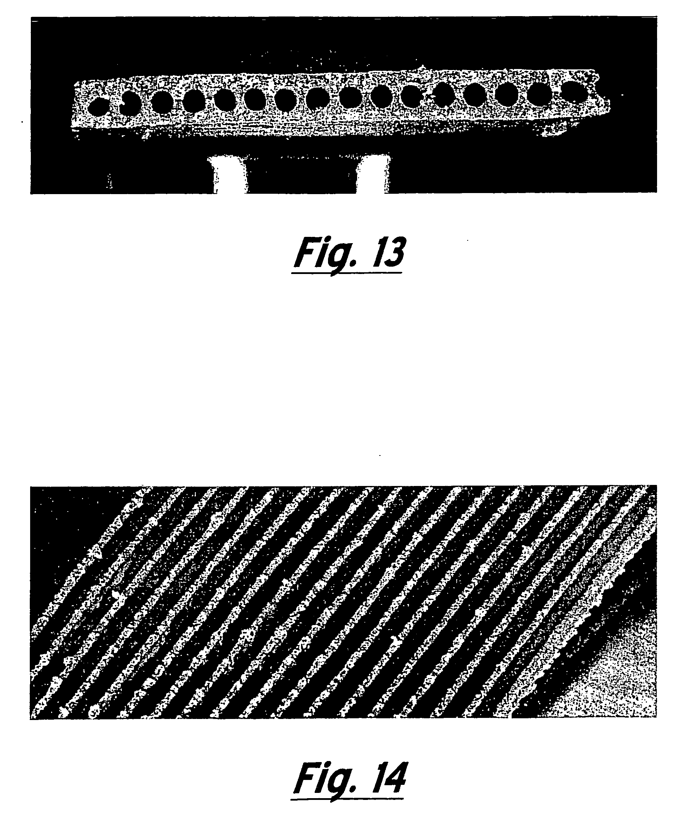

Figures 8-14 shows photographs of extrusions formed in the third phase of experiments. Figure 8 shows a hard candy with an air fill. Figure 9 shows a hard candy with a liquid fill. Figure 9 shows a gum with an air fill. Figure 10 shows a gum with a liquid fill. Figure 11 shows a chocolate with an air fill. Figure 12 shows a chocolate with an air fill as shown in Figure 11, but in longitudinal cross section.

Confectionery products and methods of the invention have been shown for chocolate, hard candy and gum. The experiments of the third phase had shown a range of food materials that can also be used. It could therefore be deduced that any product normally solid at room temperature yet extrudable at elevated temperature and pressure could be formed into a capillary product such as chewy, gummy or jelly candies, for example. Products that show high extensional viscosity when warm may be drawn to alter their geometry and their outer to inner ratio.

It has also been shown that air, liquid and solid centres can be incorporated into capillary extrusions, providing the solid centre can be liquefied and is flowable.

It will be apparent to the skilled addressee that the capillary extrudate produced in the examples could be employed in confectionery in a number of ways. For example, a chocolate extrudate having capillaries filled with air could be used to manufacture a chocolate bar having a similar size to a regular bar, but lower in fat and sugar - as it contains less material. Alternatively, a chocolate extrudate could have capillaries filled with a liquid chocolate filling so as to provide an enhanced sensory pleasure. A further example may be a milk chocolate extrudate having capillaries filled with a dark chocolate filling, so as to produce a different flavour profile.

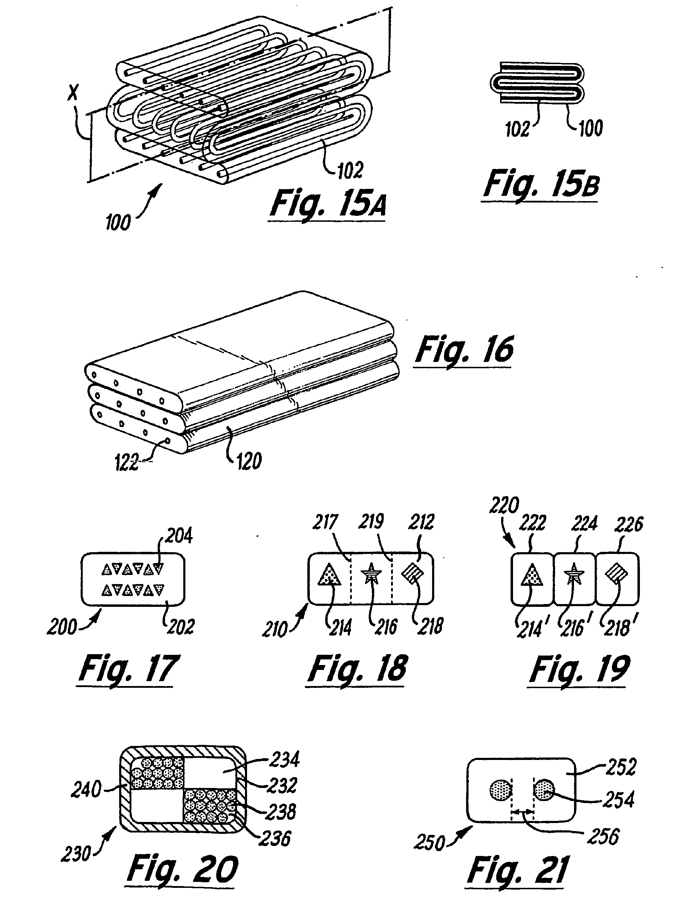

The extrudates of the present invention could be configured in a number of ways. For example, Figures 15A and 15B show an extrudate 100 having centre filled capillaries 102, where the extrudate is folded back on it self several times. Such a configuration would enable an extended release of centre fill during chewing. A chocolate éclair could be formed having a chewy centre having liquid filled capillaries - where the chewy centre was a folded several times so as to enable the liquid fill to be released over an extended period.

Figure 16 shows multiple layers of extrudate 120 being stacked on top of one another and each stack having a plurality of capillaries 122 with a centre filling. Such an arrangement could also be employed in a chewy confectionery.

With reference to Figure 17, a confectionery product 200 is shown which has an extruded body 202, formed from a candy material. Within the extruded body 202 is located a number of parallel capillaries 204 containing liquid fondant. The capillaries 204 have a triangularly shaped cross-section and are arranged such that one side of each triangular edge is maintained equidistant from an adjacent capillary so as to form a row of capillaries which are evenly spaced apart from one another.

Referring now to Figure 18, there is shown a confectionery product 210 which has an extruded body 212 formed from a candy material. Disposed within the extruded body are three capillaries, all of which have differently shaped cross-sections and all of which contain differently flavoured liquid fondants. The first capillary 214 has a triangular shaped cross-section and is filled with a strawberry flavoured liquid fondant, the second capillary 216 has a star shaped cross-section and is filled with a lime flavoured liquid fondant, whereas the third capillary 218 has a square shaped cross-section filled with a raspberry liquid fondant.

Additionally, the extruded body 212 is provided with some form of portioning means, such as lines of weakness 217, 219 which allows the customer to separate parts of the body containing different capillaries from each other. The lines of weakness 217,219 may be formed during extrusion or introduced after extrusion. This confectionery product not only produces a burst of different flavours in the mouth when consumed, but also provides a product with a novel and attractive centre. Furthermore, by allowing the product to be portioned, if desired, the customer is able to share or choose which flavour is to be consumed.

With reference to Figure 19, there is shown a confectionery product having the similar features as to that shown in Figure 18 and similar features are denoted with the same reference numeral prime ('). However, rather than having lines of weakness 217,219, the extruded body is formed into first 222, second 224 and third 226 portions within which are disposed the first 214', second 216' and third 218' capillaries. The portions can be separated from each other easily if desired.

Figure 20 shows another confectionery product 230 which has an extruded body portion 232 made from a candy material. The cross-section of the extruded body portion is divided into four equal zones. A first set of two diagonally opposed zones 234 is formed simply of the candy material, whereas a second set of two diagonally opposed zones 236 contain a plurality of parallel capillaries 238 which are filled with a liquid fondant. A coating layer of chocolate 240 surrounds the extruded body portion. When consumed, the different zones of the confectionery product produces pleasant sensory mouth feel with the chocolate melting initially, followed by the release of the liquid fondant at the same time as the candy softening and dissolving in the mouth.

Lastly, Figure 21 shows a confectionery product 250 which has an extruded body portion 252, within which are disposed capillaries 254 containing a liquid fondant. The space 256 between the capillaries is equal to the thickness to that of the width or diameter of the capillaries.

The foregoing embodiments are not intended to limit the scope of protection afforded by the claims, but rather to describe examples as to how the invention may be put into practice.

## Claims

1. A confectionery product comprising a unitary extruded body portion, the body portion being formed from a material which is liquid during extrusion and which has a plurality of capillaries disposed therein, the capillaries have an average width or diameter of no more than 3 mm and result in a voidage of over 35%.

2. A confectionery product as claimed in claim 1, wherein the capillaries are filled with a fluid material, wherein the fluid optionally comprises a liquid, the liquid optionally being a liquid material which solidifies.

3. A confectionery product as claimed in claim 1 or claim 2, wherein the product further comprises a coating portion to envelop the extruded body portion, wherein the body portion is optionally at least partially solid.

4. A confectionery product as claimed in any preceding claim wherein the capillaries have an average diameter or width of no more than 2 mm.

5. A confectionery product as claimed in any preceding claim where the body portion comprises a first extruded portion and a second extruded portion, wherein each portion has a plurality of capillaries disposed therein, and the capillaries of the first and second portions are:
a) discontinuous; and/or
b) continuous and oriented in more than one direction.

6. A confectionery product as claimed in claim 5, wherein the capillaries of each portion are formed substantially parallel to one another; and/or
wherein the first and second portions are in a stacked configuration, such that the capillaries of the first and second portions are substantially parallel to each other; and/or
wherein the first and second portions are in a folded configuration; or wherein the first and second portions are discontinuous and the capillaries are oriented in a random configuration in relation to one another.

7. A confectionery product as claimed in claim 5 or claim 6, wherein one or more of the capillaries are filled with a material which is different from that of the material used to form the first and/or second extruded portion.

8. A confectionery product as claimed in any preceding claim, wherein two or more capillaries have different widths or diameters, and/or wherein two or more capillaries have different cross-sectional profiles.

9. A process for manufacturing a confectionery product comprising a unitary extruded body portion having a plurality of capillaries disposed therein, the process comprising the step of:
a) extruding an extrudable confectionery material which is liquid during extrusion with a plurality of capillaries disposed therein, wherein the capillaries have a width or diameter of no more than 3mm and result in a voidage of over 35%.

10. A process as claimed in claim 9, further comprising a step selected from:
a) cutting the extrudate into two or more pieces having a plurality of capillaries disposed therein and forming a confectionery product incorporating the pieces; or
b) folding the extrudate and forming a confectionery product incorporating the folded extrudate; and/or
c) wherein the extrudable confectionery material optionally at least partially solidifies after extrusion.

11. A process as claimed in claim 9 or 10, wherein the process further comprises the step of depositing a filling in at least part of one or more of the capillaries, wherein the filling is optionally deposited during the step of extrusion, wherein the filling optionally comprises a fluid, which fluid may optionally comprise a liquid, which liquid may optionally solidify after deposition.

12. A process as claimed in any of claims 9 to 11, wherein the process further comprises the step of quench cooling the extrudate after extrusion, wherein the quench cooling optionally uses a fluid; and/or
wherein the process further comprises the step of, after extrusion, stretching the extrudate; and/or
wherein the process further comprises the step of enveloping the confectionery product in a coating.

13. A process as claimed in any of claims 9 to 12, wherein two or more capillaries are formed having different widths or diameters, and/or wherein two or more of the capillaries are formed having different cross-sectional profiles.

14. A process as claimed in any of claims 9 to 13, wherein the process is for producing a confectionery material as claimed in any one of claims 1 to 8.

## Patentansprüche

1. Süßwarenprodukt umfassend einen einheitlichen extrudierten Körperanteil, wobei der Körperanteil aus einem Material gebildet ist, welches während der Extrusion flüssig ist und eine Vielzahl von darin angeordneten Kapillaren aufweist, wobei die Kapillaren eine durchschnittliche Breite oder einen durchschnittlichen Durchmesser von nicht mehr als 3 mm aufweisen und zu einem Leerraumanteil von über 35 % führen.

2. Süßwarenprodukt nach Anspruch 1, wobei die Kapillaren mit einem Fluidmaterial gefüllt sind, wobei das Fluid optional eine Flüssigkeit umfasst, wobei die Flüssigkeit optional ein flüssiges Material ist, das sich verfestigt.

3. Süßwarenprodukt nach Anspruch 1 oder Anspruch 2, wobei das Produkt des Weiteren einen Beschichtungsanteil umfasst, um den extrudierten Körperanteil einzuhüllen, wobei der Körperanteil optional zumindest zum Teil fest ist.

4. Süßwarenprodukt nach einem der vorhergehenden Ansprüche, wobei die Kapillaren einen durchschnittlichen Durchmesser oder eine durchschnittliche Breite von nicht mehr als 2 mm aufweisen.

5. Süßwarenprodukt nach einem der vorhergehenden Ansprüche, wobei der Körperanteil einen ersten extrudierten Anteil und einen zweiten extrudierten Anteil umfasst, wobei jeder Anteil eine Vielzahl von darin angeordneten Kapillaren aufweist, und die Kapillaren der ersten und zweiten Anteile:
a) diskontinuierlich; und/oder
b) kontinuierlich und in mehr als eine Richtung orientiert sind.

6. Süßwarenprodukt nach Anspruch 5, wobei die Kapillaren eines jeden Anteils im Wesentlichen parallel zueinander ausgebildet sind, und/oder wobei die ersten und zweiten Anteile sich in einer übereinander angeordneten Konfiguration befinden, so dass die Kapillaren der ersten und zweiten Anteile im Wesentlichen parallel zueinander sind; und/oder
wobei die ersten und zweiten Anteile sich in einer gefalteten Konfiguration befinden; oder
wobei die ersten und zweiten Anteile diskontinuierlich sind und die Kapillaren relativ zueinander in einer zufälligen Konfiguration orientiert sind.

7. Süßwarenprodukt nach Anspruch 5 oder Anspruch 6, wobei eine oder mehrere der Kapillaren mit einem Material gefüllt sind, welches sich von dem zur Bildung des ersten und/oder zweiten extrudierten Anteils verwendeten Material unterscheidet.

8. Süßwarenprodukt nach einem der vorhergehenden Ansprüche, wobei zwei oder mehr Kapillaren unterschiedliche Breiten oder Durchmesser aufweisen und/oder wobei zwei oder mehr Kapillaren unterschiedliche Querschnittsprofile aufweisen.

9. Verfahren zur Herstellung eines Süßwarenprodukts umfassend einen einheitlichen extrudierten Körperanteil mit einer Vielzahl von darin angeordneten Kapillaren, wobei das Verfahren den Schritt umfasst:
a) Extrudieren eines extrudierbaren Süßwarenmaterials, welches während der Extrusion flüssig ist, mit einer Vielzahl von darin angeordneten Kapillaren, wobei die Kapillaren eine Breite oder einen Durchmesser von nicht mehr als 3 mm aufweisen und zu einem Leerraumanteil von über 35 % führen.

10. Verfahren nach Anspruch 9, des Weiteren umfassend einen Schritt ausgewählt aus:
a) Schneiden des Extrudats in zwei oder mehr Stücke mit einer Vielzahl von darin angeordneten Kapillaren und Bilden eines Süßwarenprodukts, welches die Stücke enthält; oder
b) Falten des Extrudats und Bilden eines Süßwarenprodukts, welches das gefaltete Extrudat enthält, und/oder
c) wobei das extrudierbare Süßwarenmaterial sich optional zumindest zum Teil nach der Extrusion verfestigt.

11. Verfahren nach Anspruch 9 oder 10, wobei das Verfahren des Weiteren den Schritt des Einlagerns einer Füllung in zumindest einem Teil einer oder mehrerer der Kapillaren umfasst, wobei die Füllung optional während des Schrittes der Extrusion eingelagert wird, wobei die Füllung optional ein Fluid umfasst, welches optional eine Flüssigkeit umfassen kann, welche sich optional nach der Einlagerung verfestigen kann.

12. Verfahren nach einem der Ansprüche 9 bis 11, wobei das Verfahren des Weiteren den Schritt des Quenchkühlens des Extrudats nach der Extrusion umfasst, wobei das Quenchkühlen optional ein Fluid verwendet; und/oder
wobei das Verfahren des Weiteren den Schritt der Dehnung des Extrudats nach der Extrusion umfasst; und/oder
wobei das Verfahren des Weiteren den Schritt der Einhüllung des Süßwarenprodukts in einer Beschichtung umfasst.

13. Verfahren nach einem der Ansprüche 9 bis 12, wobei zwei oder mehr Kapillaren mit unterschiedlichen Breiten oder Durchmessern gebildet werden, und/oder wobei zwei oder mehr der Kapillaren mit unterschiedlichen Querschnittsprofilen gebildet werden.

14. Verfahren nach einem der Ansprüche 9 bis 13, wobei das Verfahren zur Herstellung eines Süßwarenmaterials nach einem der Ansprüche 1 bis 8 dient.

## Revendications

1. Produit de confiserie comprenant une partie de corps extrudée unitaire, la partie de corps étant formée à partir d'une matière qui est liquide pendant l'extrusion et qui a une pluralité de capillaires disposés à l'intérieur de celle-ci, les capillaires ayant une largeur moyenne ou un diamètre moyen non supérieur(e) à 3 mm et se traduisant par un taux de vide supérieur à 35 %.

2. Produit de confiserie selon la revendication 1, dans lequel les capillaires sont remplis avec une matière fluide, dans lequel le fluide comprend facultativement un liquide, le liquide étant facultativement une matière liquide qui se solidifie.

3. Produit de confiserie selon la revendication 1 ou 2, dans lequel le produit comprend en outre une partie d'enrobage pour envelopper la partie de corps extrudée, dans lequel la partie de corps est facultativement au moins partiellement solide.

4. Produit de confiserie selon l'une quelconque des revendications précédentes, dans lequel les capillaires ont un diamètre moyen ou une largeur moyenne non supérieur(e) à 2 mm.

5. Produit de confiserie selon l'une quelconque des revendications précédentes, dans lequel la partie de corps comprend une première partie extrudée et une seconde partie extrudée, dans lequel chaque partie a une pluralité de capillaires disposés à l'intérieur de celle-ci, et les capillaires des première et seconde parties sont :
a) discontinus ; et/ou
b) continus et orientés dans plus d'une direction.

6. Produit de confiserie selon la revendication 5, dans lequel les capillaires de chaque partie sont formés de manière sensiblement parallèle entre eux ; et/ou
dans lequel les première et seconde parties sont dans une configuration empilée, de sorte que les capillaires des première et seconde parties sont sensiblement parallèles entre eux ; et/ou
dans lequel les première et seconde parties sont dans une configuration pliée ; ou bien
dans lequel les première et seconde parties sont discontinues et les capillaires sont orientés dans une configuration aléatoire les uns par rapport aux autres.

7. Produit de confiserie selon la revendication 5 ou 6, dans lequel un ou plusieurs des capillaires sont remplis avec une matière différente de la matière utilisée pour former la première et/ou la seconde partie extrudée.

8. Produit de confiserie selon l'une quelconque des revendications précédentes, dans lequel deux capillaires ou plus ont des largeurs ou diamètres différent(e)s, et/ou dans lequel deux capillaires ou plus ont des profils transversaux différents.

9. Procédé de fabrication d'un produit de confiserie comprenant une partie de corps extrudée unitaire ayant une pluralité de capillaires disposés à l'intérieur de celle-ci, le procédé comprenant les étapes consistant à :
a) extruder une matière de confiserie extrudable qui est liquide pendant l'extrusion avec une pluralité de capillaires disposés à l'intérieur de celle-ci, dans lequel les capillaires ont une largeur ou un diamètre non supérieur(e) à 3 mm et se traduisent par un taux de vide supérieur à 35 %.

10. Procédé selon la revendication 9, comprenant en outre une étape choisie parmi :
a) la découpe de l'extrudat en deux morceaux ou plus, ayant une pluralité de capillaires disposés à l'intérieur de celui-ci, et la formation d'un produit de confiserie comprenant les morceaux ; ou bien
b) le pliage de l'extrudat et la formation d'un produit de confiserie comprenant l'extrudat plié ; et/ou
c) dans lequel la matière de confiserie extrudable se solidifie au moins partiellement, facultativement, après extrusion.

11. Procédé selon la revendication 9 ou 10, dans lequel le procédé comprend en outre l'étape de dépôt d'une garniture dans au moins une partie des un ou plusieurs capillaires, dans lequel la garniture est facultativement déposée pendant l'étape d'extrusion, dans lequel la garniture comprend facultativement un fluide, lequel fluide peut facultativement comprendre un liquide, lequel liquide peut facultativement se solidifier après dépôt.

12. Procédé selon l'une quelconque des revendications 9 à 11, le procédé comprenant en outre l'étape de refroidissement par trempe de l'extrudat après extrusion, dans lequel le refroidissement par trempe utilise facultativement un fluide ; et/ou
le procédé comprenant en outre l'étape, après extrusion, d'étirement de l'extrudat ; et/ou
le procédé comprenant en outre l'étape d'enveloppage du produit de confiserie dans un enrobage.

13. Procédé selon l'une quelconque des revendications 9 à 12, dans lequel deux capillaires ou plus sont formés en ayant des largeurs ou diamètres différent(e)s, et/ou dans lequel deux capillaires ou plus sont formés en ayant des profils transversaux différents.

14. Procédé selon l'une quelconque des revendications 9 à 13, le procédé étant destiné à produire une matière de confiserie selon l'une quelconque des revendications 1 à 8.
